# EUROPÄISCHE PATENTANMELDUNG

(11) **EP 2 674 028 A2**
(43) Veröffentlichungstag der Anmeldung: **18.12.2013**
(21) Anmeldenummer: 13002698.2
(22) Anmeldetag: 23.05.2013
(51) Int. Cl.: A01K 5/00, B01F 7/24, B01F 7/00

(54) **Schneidmesserhalterung**

(30) Priorität: 14.06.2012 DE 202012005858 U
(71) Anmelder: Mayer Verwaltungs GmbH & Co. KG, 84529 Tittmoning (DE)
(72) Erfinder: Mayer, Georg, 84529 Tittmoning (DE)
(74) Vertreter: Bauer, Friedrich

(57) **Zusammenfassung**

Eine Schneidmesserhalterung zum Befestigen eines Schneidmessers (4) von einer Wand (3) eines Maschinenteils einer landwirtschaftlichen Maschine, insbesondere an einer Schneckengewindewand einer Mischschnecke (1) eines Futtermischwagens weist eine Haltevorrichtung (6) mit einer Halteplatte (7) auf, die parallel zum Schneidmesser (4) an der Wand (3) befestigbar ist. Zwischen Wand (3) und Halteplatte (7) ist ein Einführspalt vorgesehen, in dem ein Endabschnitt des Schneidmessers (4) mit geringem Spiel einführbar ist. Durch den Einführspalt hindurch erstreckt sich eine Achse (9) zur schwenkbaren Abstützung des Schneidmessers (4).

## Beschreibung

Die Erfindung betrifft eine Schneidmesserhalterung zum Befestigen eines Schneidmessers an einer Wand eines Maschinenteils einer landwirtschaftlichen Maschine, insbesondere an einer Schneckengewindewand einer Mischschnecke eines Futtermischwagens, gemäß dem Oberbegriff des Anspruches 1.

In der Landwirtschaft ist es bekannt, zum Mischen von Futtermitteln wie Silage, Mais, Kraftfutter etc. Futtermischwagen zu verwenden, die mindestens eine Mischschnecke aufweisen. Die Mischschnecke ist dabei beispielsweise um eine vertikale Drehachse drehbar in einem oben offenen Mischbehälter angeordnet.

An der Schneckengewindewand der Mischschnecke werden dabei häufig radial nach außen vorstehende Schneidmesser befestigt, um das Futtermittel, insbesondere die Silage, zu schneiden. Hierdurch lässt sich eine bessere Durchmischung der Silage mit anderen Futtermittel erzielen. Weiterhin kann das fertig gemischte Futtermittel in geschnittenem Zustand gleichmäßiger aus dem Futtermischwagen ausgebracht werden. Die Schneidmesser werden üblicherweise mittels mehrerer Schrauben an der Schneckengewindewand festgeschraubt. Sollen die Schneidmesser nach längerer Einsatzdauer demontiert werden, um sie auszutauschen oder nachzuschleifen, so ist ein Lösen der Schraubverbindungen häufig nicht mehr oder nur mit großen Schwierigkeiten und mit entsprechend großem Arbeitsaufwand möglich.

Der Erfindung liegt daher die Aufgabe zugrunde, eine Schneidmesserhalterung der eingangs genannten Art zu schaffen, bei welcher die Schneidmesser auf möglichst einfache und schnelle Weise montiert und demontiert werden können.

Diese Aufgabe wird erfindungsgemäß durch eine Schneidmesserhalterung mit den Merkmalen des Anspruches 1 gelöst. Vorteilhafte Ausführungsformen der Erfindung sind in den weiteren Ansprüchen beschrieben.

Bei der erfindungsgemäßen Schneidmesserhalterung ist eine Haltevorrichtung mit einer Halteplatte vorgesehen, die parallel zum Schneidmesser und zumindest über einen Teilbereich mit einem derartigen vorbestimmten Abstand zur Wand des Maschinenteils an der Wand befestigbar ist, dass zwischen Wand und Halteplatte ein Einführspalt gebildet wird, in den ein Endabschnitt des Schneidmessers mit geringem Spiel einführbar ist. Durch den Einführspalt hindurch erstreckt sich eine quer verlaufende Achse zur schwenkbaren Abstützung des Schneidmessers im Bereich seines Endabschnittes. Weiterhin weist das Schneidmesser eine zu einem Schneidmesserrand hin offene langlochförmige Führungskulisse auf, in welche die Achse einführbar ist. Ferner weist die Haltevorrichtung eine an der Halteplatte befestigte oder einteilig mit dieser ausgebildete Abstützeinrichtung zur rückseitigen Abstützung des Schneidmessers in einem Schneidmesserbereich auf, der zur Führungskulisse beabstandet ist.

Mit der erfindungsgemäßen Schneidmesserhalterung lässt sich das Schneidmesser auf sehr einfache und schnelle Weise demontieren und montieren. Die zur Befestigung der Schneidmesserhalterung an der Wand des Maschinenteils dienenden Schrauben müssen hierzu nicht auf- bzw. zugeschraubt werden. Die beim Betrieb auf das Schneidmesser einwirkenden Kräfte werden ausschließlich oder zumindest weit überwiegend durch eine Formschlussverbindung vom Schneidmesser auf die Haltevorrichtung übertragen. Zum Demontieren des Schneidmessers genügt es daher, wenn nach dem Lösen eines beispielsweise aus einer einzelnen Schraube bestehenden Lagesicherungsmittels, das zwischen Haltevorrichtung und Schneidmesser vorgesehen ist, die Formschlussverbindung zwischen Schneidmesser und Haltevorrichtung gelöst wird. Dies kann insbesondere dadurch erfolgen, dass das Schneidmesser von der rückseitigen Abstützeinrichtung weg geschwenkt wird, wodurch das Schneidmesser über die Kulissenführung von der Achse gelöst werden kann. Die Demontage und Montage des Schneidmessers von der bzw. an der Haltevorrichtung erfolgt somit dadurch, dass die Winkelstellung des Schneidmessers relativ zur Haltevorrichtung im Vergleich zur derjenigen Winkelstellung, die das Schneidmesser im Betrieb einnimmt, geändert wird. Die im Betrieb auftretenden, auf das Schneidmesser einwirkenden Kräfte werden dagegen einerseits durch die Achse und andererseits durch die rückseitige Abstützeinrichtung der Haltevorrichtung formschlüssig aufgenommen.

Vorzugsweise ist die Halteplatte eben ausgebildet und wird mittels eines zwischen Wand und Halteplatte angeordneten Abstandshalters auf dem vorbestimmten Abstand zur Wand gehalten, wodurch der Enführspalt für das Schneidmesser gebildet wird. Dies ermöglicht eine sehr einfache Herstellung der Haltevorrichtung.

Vorzugsweise wird die rückseitige Abstützeinrichtung durch den Abstandshalter gebildet. Es ist in diesem Fall nicht erforderlich, für die rückseitige Abstützeinrichtung und den Abstandshalter getrennte Teile vorzusehen, was eine kostengünstige Fertigung und einfache Montage ermöglicht.

Besonders bevorteilhaft ist es dabei, wenn der Abstandshalter als ebene Abstandshalterplatte ausgebildet ist, die mit der Halteplatte verschweißt oder verklebt ist. Derartige ebene Platten sind einfach herzustellen. Darüber hinaus können hierdurch einerseits zwischen Abstandshalter und Wand und andererseits zwischen Abstandshalter und Halteplatte große Kontaktflächen geschaffen werden, die eine sichere und feste Verbindung zwischen diesen Teilen gewährleisten.

Vorteilhafterweise erstreckt sich die Haltevorichtung über den Rand der Wand hinaus, wobei die Halteplatte denjenigen Abschnitt des Schneidmessers, der über die Wand vorsteht, zumindest über den überwiegenden Teil der Schneidmesserlänge unter- oder übergreift. Da im Fall einer Vertikalmischschnecke die Schneidmesserhalterung vorzugsweise an der Unterseite der Schneckengewindewand befestigt wird, untergreift in diesem Fall die Halteplatte denjenigen Abschnitt des Schneidmessers, der über die Wand vorsteht, zumindest über den überwiegenden Teil der Schneidmesserlänge. Das Schneidmesser wird hierdurch somit auch in vertikaler Richtung unterstützt. Hierdurch wird der Gefahr entgegengewirkt, dass sich die Schneidmesser nach unten verbiegen, wenn - insbesondere beim Beladen des Futtermischwagens oder auch während des Mischvorgangs - Futtermittel von oben auf das Schneidmesser fällt oder drückt.

Vorteilhafterweise ist in demjenigen Endbereich der Haltevorrichtung, der zur Wand benachbart ist, eine Mehrzahl von Befestigungsbohrungen vorgesehen, die bei montierter Schneidmesserhalterung auf einem Kreis mit gleichem Radius um die Achse herum angeordnet sind, so dass ein mit der Wand zusammenwirkendes Befestigungsmittel in unterschiedlichen Befestigungsbohrungen einführbar ist, um eine Winkelverstellung des Schneidmessers zusammen mit der Haltevorrichtung relativ zur Wand zu bewirken. Das Schneidmesser kann dadurch auf sehr einfache Weise in unterschiedlichen Winkelstellungen an der Wand des Maschinenteils arretiert werden. Die Winkelstellung des Schneidmessers kann dadurch einfach an die Art des Futtermittels angepasst werden. Weiterhin kann dadurch die Winkelstellung der Schneidmesserhalterung einfach entsprechend der Form des ausgewählten Schneidmessers optimal eingestellt werden.

Vorteilhafterweise besteht die Führungskulisse aus einem viertelkreisförmig gebogenen Langloch, das im rückseitigen Randbereich des Schneidmessers zunächst quer verläuft und zu seinem Ende hin in Längsrichtung des Schneidmessers abgebogen ist. Hierdurch kann auf einfache Weise sichergestellt werden, dass im Betriebszustand die auf den Endbereich des Schneidmessers einwirkenden Hauptkräfte über die Seitenwand der Führungskulisse auf die Achse übertragen werden.

Die Erfindung wird nachfolgend anhand der Zeichnungen beispielhaft näher erläutert. Es zeigen:
- Figur 1 :: ein Maschinenteil in der Form einer Mischschnecke eines Futtermischwagens schräg von oben, wobei im Zusammenhang mit zwei Schneidmessern die erfindungsgemäße Schneidmesserhalterung eingezeichnet ist;
- Figur 2 :: die erfindungsgemäße Schneidmesserhalterung mit eingesetztem Schneidmesser schräg von oben;
- Figur 3 :: einen Randbereich der Mischschnecke von Figur 1 mit montierter Haltevorrichtung, jedoch ohne Schneidmesser;
- Figur 4 :: eine Darstellung gemäß Figur 3, jedoch mit montiertem Schneidmesser;
- Figur 5 :: eine Draufsicht auf eine Halteplatte in Alleinstellung;
- Figur 6 :: eine Draufsicht auf eine rückseitige Abstützeinrichtung, die gleichzeitig einen Abstandshalter bildet;
- Figur 7 :: eine Zusammenstellungszeichnung der in den Figuren 5 und 6 gezeigten Teile;
- Figur 8 :: eine rückseitige Ansicht der Teilekombination von Figur 7;
- Figur 9 :: eine Draufsicht auf ein Schneidmesser;
- Figur 10 :: eine Draufsicht auf die Haltevorrichtung des montierten Schneidmessers; und
- Figur 11 :: eine rückseitige Ansicht der Haltevorrichtung und des Schneidmessers von Figur 10.

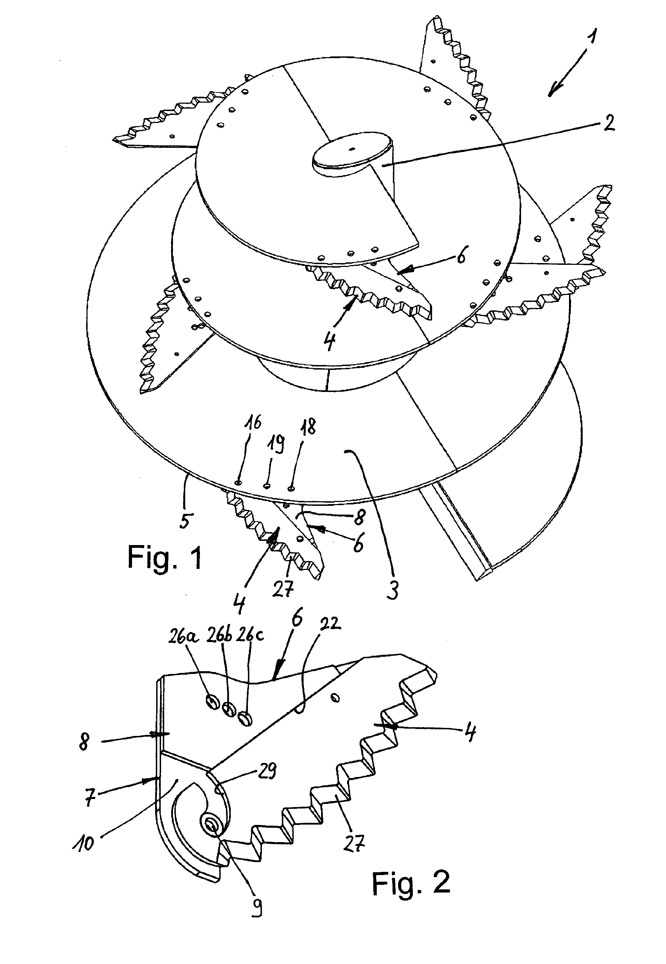

In Figur 1 ist ein Maschinenteil in der Form einer Mischschnecke 1 eines Futtermischwagens schräg von oben dargestellt. Die Mischschnecke 1 weist eine mittige, vertikal angeordnete Schneckenwelle 2 auf, die in einem unteren Endbereich in einer nicht näher dargestellten Weise über ein Getriebe in Umdrehung versetzt werden kann. Um die Schneckenwelle 2 herum verläuft in bekannter Weise spiralförmig eine Schneckengewindewand, die im Folgenden als Wand 3 bezeichnet wird.

An der Unterseite der Wand 3 sind mehrere, über den Umfang verteilte Schneidmesser 4 befestigt, die radial nach außen über den äußeren Rand 5 der Wand 3 vorstehen. Die Hauptebene der Schneidmesser 4 verläuft parallel oder zumindest weitgehend parallel zur Ebene der Wand 3 im jeweiligen Befestigungsbereich.

Die Schneidmesser 4 sind jeweils mittels einer Haltevorrichtung 6 an der Unterseite der Wand 4 befestigt. In Figur 1 ist die Haltevorrichtung 6 lediglich im Zusammenhang mit dem untersten und obersten Schneidmesser 4 eingezeichnet. Zweckmäßigerweise sind jedoch sämtliche Schneidmesser 4 mittels einer entsprechenden Haltevorrichtung 6 an der Wand 3 befestigt.

Die Haltevorrichtung 6 umfasst, wie insbesondere aus den Figuren 2 bis 8 hervorgeht, eine ebene Halteplatte 7, welche das Schneidmesser 4 untergreift, eine Abstandshalterplatte 8, welche die Halteplatte 7 in einem vorbestimmten Abstand zur Unterseite der Wand hält und gleichzeitig eine rückseitige Abstützeinrichtung für das Schneidmesser 4 bildet, sowie eine Achse 9 in Form einer zylindrischen Hülse, die in einem von der Abstandshalterplatte 8 frei gelassenen Freiraum 10 zwischen der Halteplatte 7 und der Wand 3 angeordnet ist.

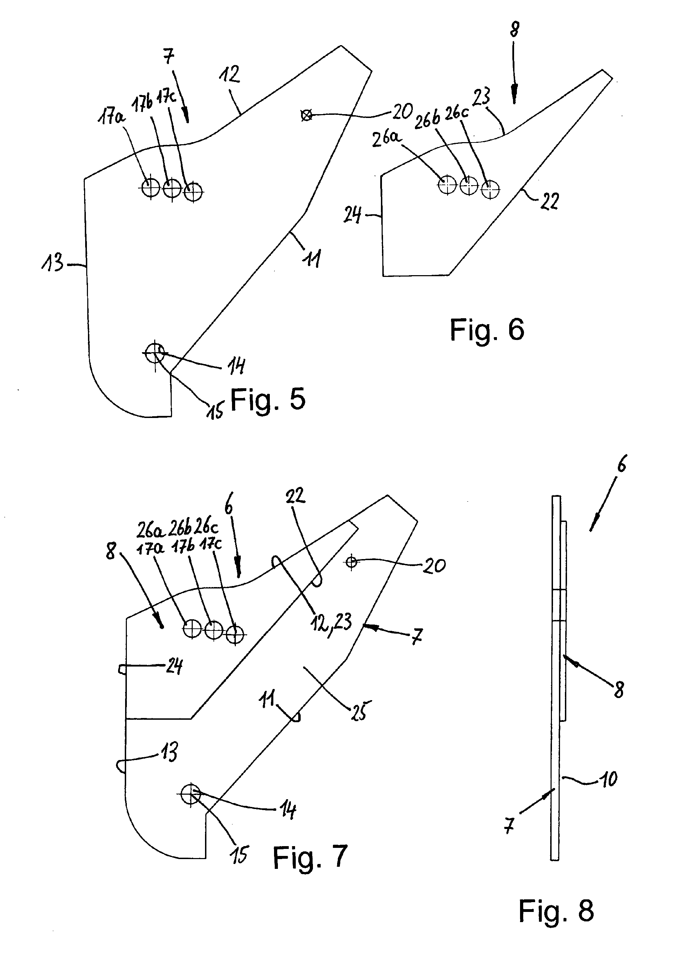

Die Halteplatte 7 ist in Alleinstellung in Figur 5 dargestellt. Sie besteht aus einer zumindest im Wesentlichen ebenen Platte mit einem vorderen Rand 11, einem hinteren Rand 12 und einem radial inneren Rand 13. "Vorne" und "hinten" bezieht sich dabei auf die Umdrehungsrichtung der Mischschnecke 2, während "radial innen" bzw. "radial außen" die radiale Relativposition relativ zur Schneckenwelle 2 angibt. Als "radial innerer Rand 13" wird somit derjenige Rand angesehen, der zum äußeren Rand 5 der Wand 3 benachbart ist und zu diesem eine geringfügig nach innen versetzte Sekante im jeweiligen Befestigungsbereich bildet.

Die Halteplatte 7 weist im Bereich ihres radial inneren Randes 13 die größte Breite auf und verjüngt sich radial nach außen, wodurch eine grob dreieck- oder segelförmige Kontur gebildet wird.

In einem Bereich, der in der Nähe des Kreuzungsbereichs zwischen vorderem Rand 11 und radial innerem Rand 13 liegt, ist eine Befestigungsbohrung 14 zum Hindurchführen einer ersten, nicht näher dargestellten Befestigungsschraube vorgesehen. Die Befestigungsbohrung 14 liegt auf derselben Mittelachse 15 wie die Achse 9 und eine erste Wandbohrung 16, die in einem Randbereich der Wand 3 vorgesehen ist. Die erste Befestigungsschraube kann damit von oben her durch die erste Wandbohrung 16, die hülsenförmige Achse 9 sowie die Befestigungsbohrung 14 der Halteplatte 7 hindurch gesteckt und auf der Unterseite der Halteplatte 7 mittels einer Mutter festgeschraubt werden.

Wie weiterhin aus Figur 5 ersichtlich, weist die Halteplatte 7 drei weitere Befestigungsbohrungen 17a, 17b, 17c auf, die auf einem Kreis mit gleichem Radius um die Mittelachse 15 und damit um die Achse 9 herum angeordnet sind. Je nach dem Anstellwinkel, den die Halteplatte 7 zum Rand 5 der Wand 3 einnehmen soll, kann die Befestigungsbohrung 17a, 17b oder 17c mit einer weiteren Wandbohrung 18 zur Deckung gebracht werden, die in Umdrehungsrichtung weiter hinten als die Wandbohrung 16 angeordnet ist.

In Figur 1 ist zwischen der vorderen Wandbohrung 16 und der hinteren Wandbohrung 18 noch eine weitere Wandbohrung 19 vorgesehen, die im vorliegenden Ausführungsbeispiel keine Funktion hat, jedoch bei anders ausgebildeten Haltevorrichtungen in entsprechender Weise zum Befestigen der Haltevorrichtung an der Wand 3 benutzt werden kann.

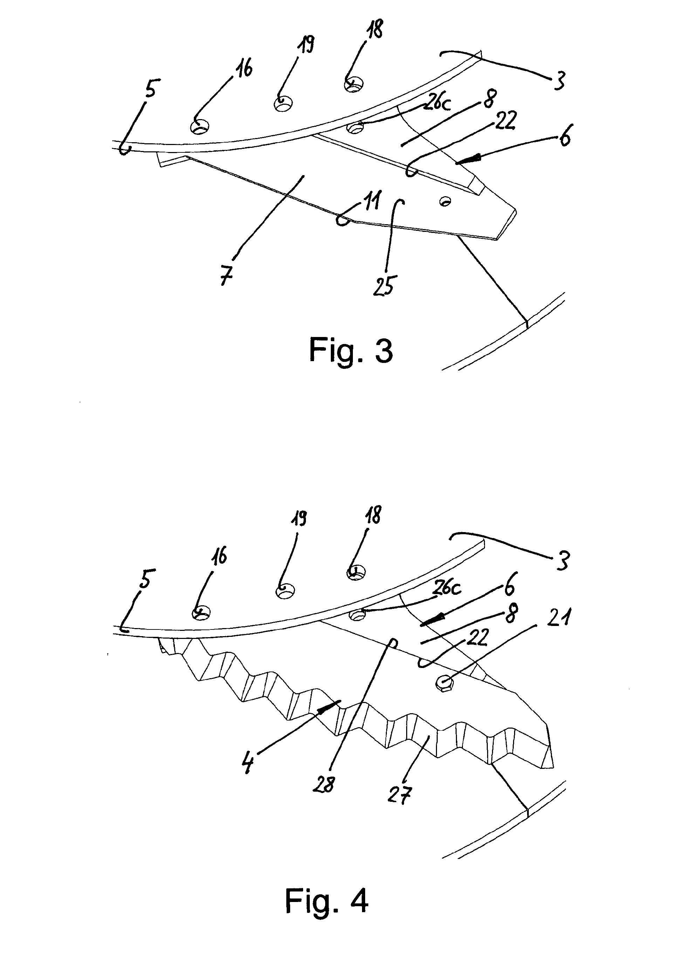

Aus Figur 5 ist weiterhin ersichtlich, dass die Halteplatte 7 in einem radial weiter außenliegenden Bereich eine kleinere Bohrung 20 aufweist. Diese Bohrung 20 ist bei montiertem Schneidmesser 4 vom Schneidmesser 4 überdeckt und dient dazu, das Schneidmesser 4 mittels einer Schraube 21 (Figur 4) auf der Halteplatte 7 festzuschrauben. Diese Schraube 21 ist jedoch lediglich ein Lagesicherungsmittel, das verhindert, dass sich das Schneidmesser 4 im radial äußeren Bereich von der Halteplatte 7 abhebt. Die vom Futtermittel auf das Schneidmesser 4 ausgeübten Kräfte müssen dagegen von dieser Schraube 21 nicht aufgenommen werden, wie im Folgenden noch näher ausgeführt wird.

Die in Figur 6 dargestellte Abstandshalterplatte 8 ist ebenfalls als ebene Platte ausgebildet und weist einen vorderen Rand 22, einen hinteren Rand 23 und einen radial inneren Rand 24 auf. Die Abstandshalterplatte 8 liegt auf der Halteplatte 7 auf und ist fest mit dieser verbunden, insbesondere verschweißt oder verklebt. Der hintere Rand 23 und der radial innere Rand 24 der Abstandshalterplatte 8 ist an die Form des hinteren Randes 12 bzw. radial inneren Randes 13 der Halteplatte 7 angepasst. In der Draufsicht liegt der hintere Rand 23 bzw. innere Rand 24 somit genau über dem hinteren Rand 12 bzw. inneren Rand 13 der Halteplatte 7.

Da die Breite der Abstandshalterplatte 8 kleiner ist als diejenige der Halteplatte 7, ist der vordere Rand 22 der Abstandshalterplatte 8 relativ zum vorderen Rand 11 der Halteplatte 7 zurückversetzt. Hierdurch wird, wie aus Figur 7 ersichtlich, durch die Halteplatte 7 eine nach vorn über die Abstandshalterplatte 8 vorragende Auflagefläche 25 gebildet, auf der das Schneidmesser 4 aufgesetzt werden kann.

Die Abstandshalterplatte 8 überdeckt die Halteplatte 7 auch im Bereich der Befestigungsbohrungen 17a, 17b, 17c. Um das Hindurchführen einer Befestigungsschraube zu ermöglichen, weist daher auch die Abstandshalterplatte 8 entsprechende Befestigungsbohrungen 26a, 26b, 26c auf, die zu den Befestigungsbohrungen 17a, 17b, 17c fluchten.

Im montierten Zustand des Schneidmessers 4 liegt dieses rückseitig am vorderen Rand 22 der Abstandshalterplatte 8 an, so dass die Abstandshalterplatte 8 gleichzeitig zur rückseitigen Abstützung des Schneidmessers 4 dient. Von der Abstandshalterplatte 8 werden damit ein Großteil der Kräfte aufgenommen, die vom Futtermittel in Umdrehungsrichtung der Mischschnecke 1 auf das Schneidmesser 4 ausgeübt werden.

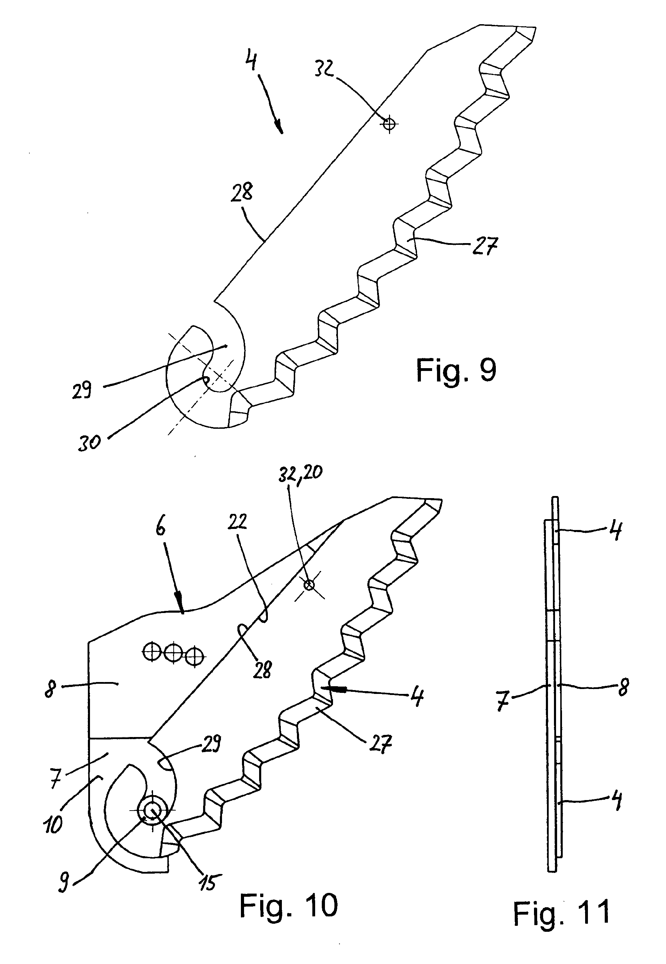

Das in Figur 9 in Einzeldarstellung gezeigte Schneidmesser 4 ist ebenfalls als ebene, längliche Platte mit gleichmäßiger Dicke ausgebildet. Im montierten Zustand steht die Schneide 27 nach vorn über die Halteplatte 7 vor, während der Messerrücken 28, wie bereits ausgeführt, am vorderen Rand 22 der Abstandshalterplatte 8 anliegt. In demjenigen Endbereich des Schneidmessers 4, der zum Rand 5 der Wand 3 benachbart ist, weist das Schneidmesser 4 eine zum Messerrücken 28 hin offene, langlochförmige Führungskulisse 29 auf, die im gezeigten Ausführungsbeispiel aus einem viertelkreisförmig gebogenen Landloch besteht. Das Langloch verläuft im rückseitigen Randbereich des Schneidmessers 4 zunächst quer, d.h. senkrecht zum Messerrücken 28, und ist zu seinem geschlossenen Ende hin in Längsrichtung des Schneidmessers 4 abgebogen. Das Ende der Führungskulisse 29 wird von einer halbkreisförmigen Kulissenwand 30 gebildet, deren Durchmesser an den äußeren Durchmesser der Achse 9 angepasst ist. Weiterhin ist auch die Breite des übrigen Teils der Führungskulisse 29 derart bemessen, dass die Achse 9 mit geringem Spiel in die Führungskulisse 29 eingeführt werden kann.

Das Einsetzen des Schneidmessers 4 erfolgt dadurch, dass das Schneidmesser 4 zunächst in einer in Umdrehungsrichtung nach vorne gekippten Schwenkstellung in den Freiraum 10 und damit in den Einführspalt zwischen Halteplatte 7 und Wand 3 eingeführt wird, wodurch das Schneidmesser 4 in die Achse 9 eingehakt werden kann. Durch ein Nachhintenschieben und gleichzeitiges Zurückschwenken des Schneidmessers 4 wird das Schneidmesser 4 dann auf die Achse 9 aufgeschoben, bis diese an der Kulissenwand 30, d.h. am Ende der Führungskulisse 29, anliegt. Die Achse 9 bildet dabei ein weiteres Abstützelement, welches das Schneidmesser 4 in seinem radial inneren Endbereich sowohl in Umfangsrichtung als auch radial nach außen arretiert.

Damit das Ende des Schneidmessers 4 einfach in den Freiraum 10 eingeführt werden kann, kann die Abstandshalterplatte 8 geringfügig dicker als das Schneidmesser 4 ausgebildet sein.

Die in Figur 2 dargestellte Achse 9 hat die Form einer zylindrischen Hülse. Die Länge dieser Hülse entspricht der Dicke der Abstandshalterplatte 8. Die Hülse bildet damit einen weiteren Abstandshalter, der die Halteplatte 7 im Bereich der Befestigungsbohrung 14 im vorbestimmten Abstand zur Unterseite der Wand 3 hält.

Die Achse 9 kann fest mit der Halteplatte 7 verschweißt sein. Dies ist jedoch nicht unbedingt erforderlich, da die Achse 9 durch die hindurchgeführte Befestigungsschraube an Ort und Stelle gehalten und zwischen der Halteplatte 7 und der Wand 3 eingeklemmt wird.

Die aus Figur 4 ersichtliche Schraube 21 kann durch eine Bohrung 32 (Figuren 9, 10) hindurchgeführt werden, um das Schneidmesser 4 in einem weiter außen liegenden Bereich auf der Halteplatte 7 festzuschrauben. Die Schraube 31 durchdringt dabei auch die Bohrung 20 der Halteplatte 7, wobei die Bohrung 20 eine Gewindebohrung oder ein Durchgangsloch sein kann.

Im Rahmen der Erfindung sind eine Vielzahl von Alternativen möglich. Beispielsweise wäre es möglich, keine Abstandshalterplatte 8 vorzusehen, die mit der Halteplatte 7 verbunden wird, sondern lediglich die Halteplatte 7, die in diesem Fall derart gekröpft ausgebildet wird, dass die Auflagefläche 25 für das Schneidmesser 4 parallel, jedoch versetzt zu derjenigen Befestigungsfläche der Halteplatte 7 angeordnet ist, die mit der Wand 3 in Kontakt gebracht wird. Weiterhin ist es auch nicht ungedingt erforderlich, dass die Abstandshalterplatte 8 gleichzeitig das rückseitige Abstützelemente für das Schneidmesser 4 bildet. Beispielsweise wäre es auch möglich, im Bereich der Befestigungsbohrungen 17a, 17b, 17c eine Abstandshülse vorzusehen und hiervon getrennt auf der Halteplatte 7 ein Abstützelement zum rückseitigen Abstützen des Schneidmessers 4 anzuschweißen. Das Schneidmesser 4 kann aus verschiedenen Materialien bestehen. Bevorzugt ist es, das Schneidmesser aus Stahl oder Gussteil zu fertigen.

## Patentansprüche

1. Schneidmesserhalterung zum Befestigen eines Schneidmessers (4) an einer Wand (3) eines Maschinenteils einer landwirtschaftlichen Maschine, insbesondere an einer Schneckengewindewand einer Mischschnecke (1) eines Futtermischwagens, **gekennzeichnet durch** folgende Merkmale:
- es ist eine Haltevorrichtung (6) mit einer Halteplatte (7) vorgesehen, die parallel zum Schneidmesser (4) und zumindest über einen Teilbereich mit einem derartigen vorbestimmten Abstand zur Wand (3) des Maschinenteils an der Wand (3) befestigbar ist, dass zwischen Wand (3) und Halteplatte (7) ein Einführspalt gebildet wird, in den ein Endabschnitt des Schneidmessers (4) mit geringem Spiel einführbar ist,
- **durch** den Einführspalt hindurch erstreckt sich eine quer verlaufende Achse (9) zur schwenkbaren Abstützung des Schneidmessers (4) im Bereich seines Endabschnitts,
- das Schneidmesser (4) weist eine zu einem Schneidmesserrand hin offene, langlochförmige Führungskulisse (29) auf, in welche die Achse (9) einführbar ist, und
- die Haltevorrichtung (6) weist eine an der Halteplatte (7) befestigte oder einteilig mit dieser ausgebildete Abstützeinrichtung zur rückseitigen Abstützung des Schneidmessers (4) in einem Schneidmesserbereich auf, der zur Führungskulisse (29) beabstandet ist.

2. Schneidmesserhalterung nach Anspruch 1, **dadurch gekennzeichnet, dass** die Halteplatte (7) eben ausgebildet ist und mittels eines zwischen Wand (3) und Halteplatte (7) angeordneten Abstandshalters auf dem vorbestimmten Abstand zur Wand (3) gehalten wird.

3. Schneidmesserhalterung nach Anspruch 2, **dadurch gekennzeichnet, dass** die rückseitige Abstützeinrichtung durch den Abstandshalter gebildet wird.

4. Schneidmesserhalterung nach Anspruch 2 oder 3, **dadurch gekennzeichnet, dass** der Abstandshalter als ebene Abstandshalterplatte (8) ausgebildet ist, die mit der Halteplatte (7) verschweißt oder verklebt ist.

5. Schneidmesserhalterung nach einem der vorhergehenden Ansprüche, **dadurch gekennzeichnet, dass** sich die Haltevorrichtung (6) über den Rand (5) der Wand (3) hinaus erstreckt, wobei die Halteplatte (7) denjenigen Abstand des Schneidmessers (4), der über die Wand (3) vorsteht, zumindest über den überwiegenden Teil der Schneidmesserlänge unter- oder übergreift.

6. Schneidmesserhalterung nach einem der vorhergehenden Ansprüche, **dadurch gekennzeichnet, dass** in demjenigen Endbereich der Haltevorrichtung (6), der zur Wand (3) benachbart ist, eine Mehrzahl von Befestigungsbohrungen (17a, 17b, 17c) vorgesehen ist, die auf einem Kreis mit gleichem Radius um die Achse (9) herum angeordnet sind, so dass ein mit der Wand (3) zusammenwirkendes Befestigungsmittel in unterschiedlichen Befestigungsbohrungen (17a, 17b, 17c) einführbar ist, um eine Winkelverstellung des Schneidmessers (4) zusammen mit der Haltevorrichtung (6) relativ zur Wand (3) zu bewirken.

7. Schneidmesserhalterung nach einem der vorhergehenden Ansprüche, **dadurch gekennzeichnet, dass** die Führungskulisse (29) aus einem viertelkreisförmig gebogenen Langloch besteht, das im rückseitigen Randbereich des Schneidmessers (4) zunächst quer verläuft und zu seinem Ende hin in Längsrichtung des Schneidmessers (4) abgebogen ist.

8. Schneidmesserhalterung nach einem der vorhergehenden Ansprüche, **dadurch gekennzeichnet, dass** die Achse (9) aus einer zylindrischen Hülse besteht, die zwischen der Halteplatte (7) und der Wand (3) eingeklemmt ist.
